# EUROPÄISCHE PATENTSCHRIFT

(11) **EP 3 560 176 B1**
(45) Veröffentlichungstag und Bekanntmachung des Hinweises auf die Patenterteilung: **10.02.2021**
(21) Anmeldenummer: 17828719.9
(22) Anmeldetag: 19.12.2017
(51) Int. Cl.: H04M 1/04, B62B 3/00

(54) **VERFAHREN ZUR VER- UND ENTRIEGELUNG EINER AUFNAHME FÜR EIN MOBILES TELEKOMMUNIKATIONS-ENDGERÄT**
METHOD FOR LOCKING AND UNLOCKING A RECEIVING AREA FOR A MOBILE TELECOMMUNICATION TERMINAL
PROCÉDÉ DE VERROUILLAGE ET DE DÉVERROUILLAGE D'UN LOGEMENT POUR UN TERMINAL DE TÉLÉCOMMUNICATION MOBILE

(30) Priorität: 23.12.2016 DE 102016125673
(43) Veröffentlichungstag der Anmeldung: 30.10.2019
(73) Patentinhaber: Wieth, Franz, 82178 Puchheim (DE); Filosi, Andreas, 82178 Puchheim (DE)
(72) Erfinder: Wieth, Franz, 82178 Puchheim (DE); Filosi, Andreas, 82178 Puchheim (DE)
(74) Vertreter: Braun-Dullaeus Pannen Emmerling Patent- & Rechtsanwaltspartnerschaft mbB
(86) Internationale Anmeldenummer: PCT/EP2017/083560
(87) Internationale Veröffentlichungsnummer: WO 2018/114959

(56) Entgegenhaltungen:
- EP-A1- 3 101 879
- WO-A1-2017/144655
- FR-A1- 2 975 557
- US-A1- 2004 111 320
- US-A1- 2012 119 874
- US-A1- 2014 375 456
- US-A1- 2015 032 559

## Beschreibung

Die Anmeldung betrifft ein Verfahren zur Verriegelung und Entriegelung einer Aufnahme für ein mobiles Telekommunikations-Endgerät, insbesondere ein Smartphone, wobei die Aufnahme in einer Halterung angeordnet ist, wobei der Halterung ein Token zugeordnet ist, wobei der in einer Einschuböffnung der Halterung gegen Entnahme gesicherte Token freigegeben wird, wenn ein Telekommunikations-Endgerät in der Aufnahme verriegelt wird, wobei zur Entriegelung der Aufnahme der Token in die Halterung eingeführt wird, wobei eine Berechtigungsprüfung durchgeführt wird, mittels der die Zuordnung des in die Halterung eingeführten Tokens überprüft wird und wobei bei erfolgreicher Zuordnung des Tokens zur Halterung die Verriegelung entriegelt wird. Des Weiteren betrifft die Anmeldung eine Halterung, welche sich zur Durchführung des Verfahrens besonders eignet.

Aus der WO 2015/055851 A1 ist eine Ausführungsform einer gattungsgemäßen Halterung bekannt, bei der die Berechtigungsprüfung zum Öffnen der Aufnahme mittels eines Token erfolgt. Hierzu ist der jeweilige Token einer bestimmten Halterung zugeordnet. Der Token ist in die Halterung eingesteckt und wird zusammen mit ihr aus einer Basis-Station entnommen, in welcher die Halterungen bereitgestellt werden. Die Berechtigungsprüfung in der Halterung kann beispielsweise über eine bestimmte Geometrie erfolgen, welche der berechtigte Token aufweisen muss. Der Token kann alternativ einen Transponder aufweisen, über den eine elektronische Berechtigungsprüfung in der Halterung erfolgt.

Diese Anmeldung stellt sich die Aufgabe, ein Verfahren zur Ver- und Entriegelung der Aufnahme einer gattungsgemäßen Halterung und zu der darin ablaufenden Berechtigungsprüfung vorzuschlagen, welches sicher funktioniert. Des Weiteren stellt sie sich die Aufgabe, eine Halterung und ein Token vorzuschlagen, welche sich besonders zur Durchführung des erfindungsgemäßen Verfahrens eignen.

Die Aufgaben werden mit dem Verfahren gemäß Anspruch 1 und der Halterung gemäß Anspruch 5 gelöst. Einige besonders bevorzugte Ausgestaltungen werden in den jeweiligen Unteransprüchen gefasst.

Ein Grundgedanke der Erfindung ist es, das Verfahren zur Ver- und Entriegelung einer Aufnahme für ein mobiles Telekommunikations-Endgerät derart auszugestalten, dass die Aufnahme in einer Halterung angeordnet ist, der Halterung ein Token zugeordnet ist, dass der in einer Einschuböffnung der Halterung gegen Entnahme gesicherte Token freigegeben wird, wenn ein Telekommunikations-Endgerät in der Aufnahme verriegelt wird Zur Entriegelung der Aufnahme wird der Token in die Halterung eingeführt, wobei eine Berechtigungsprüfung durchgeführt wird, mittels der die Zuordnung des in die Halterung eingeführten Tokens überprüft wird. Bei erfolgreicher Zuordnung des Tokens zur Halterung wird die Verriegelung entriegelt, wobei bei Verriegelung des Telekommunikations-Endgerät in der Aufnahme oder bei erfolgreicher Berechtigungsprüfung ein Signal erzeugt wird, welches an ein die Bewegung eines ersten Stellelements blockierendes Sperrelement übermittelt wird, wobei das Signal das Sperrelement aktiviert, wobei die Aktivierung des Sperrelements die Blockade der Bewegung des Stellelements zum Halten des Tokens beendet und das Sperrelement ein federbelasteter Stößel ist, welcher von einem Elektromagneten bei dessen Aktivierung entgegen der Federbelastung bewegt wird.

Ein weiterer Grundgedanke der Erfindung ist es, die Halterung für ein mobiles Telekommunikations-Endgerät so auszugestalten, dass sie eine Aufnahme für das mobile Telekommunikations-Endgerät aufweist, wobei die Halterung einen Befestigungsmechanismus aufweist, mit dem das mobile Telekommunikations-Endgerät in der Aufnahme verriegelbar ist, wobei die Halterung ein lösbar in einer Einschuböffnung gehaltenen Token umfasst, wobei ein Halteelement den Token in der Einschuböffnung fest hält, wenn die Aufnahme entriegelt ist und der Token vom Halteelement freigegeben ist, wenn die Aufnahme verriegelt ist, und wobei das Halteelement an einem rotatorisch gelagerten ersten Stellelement angeordnet ist.

Die besonderen Vorteile des erfindungsgemäßen Verfahrens und der erfindungsgemäßen Halterung sowie deren bevorzugter Ausführungsformen und deren jeweilige Vorteile werden im Folgenden anhand einer Verfahrensschilderung dargelegt. Dabei wird zuerst ein bevorzugter Verfahrensablauf bei ordnungsgemäßer Funktion der Halterung erläutert.

In der nun beschriebenen Ausgangssituation wird der Token von dem ersten Stellelement, welches im Weiteren in der bevorzugten Ausführungsform einer Steuerscheibe beschrieben wird, in der Einschuböffnung der Halterung gehalten und der teleskopierbare Bügel der Aufnahme ist in der Halterung eingefahren.

In einem ersten Schritt wird das mobile Telekommunikationsendgerät, im Weiteren als Smartphone bezeichnet, auf den für das Smartphone in der Halterung vorgesehenen Anschluss, beispielsweise einen USB-Anschluss, gesetzt. Dabei kann es auf den Bügel aufgelegt werden oder weiterhin in der Hand des Nutzers verbleiben. In einem weiteren Schritt wird der Bügel der Aufnahme ausgezogen. Nun kann das Smartphone vom Kunden in den Bügel eingelegt werden oder rutscht von alleine in diesen hinein, sobald der Bügel eine für das Smartphone ausreichend große Öffnung freigibt.

In einem folgenden Schritt wird der Bügel geschlossen, dabei drückt das Smartphone gegen einen Schalter in der oberen Leiste des Bügels, wodurch ein Signal ausgelöst wird, insbesondere ein Stromkreis geschlossen wird. Durch das Signal wird das Sperrelement aktiviert, wobei die Aktivierung des Sperrelements eine bestehende Blockade der Bewegung des Stellelements beendet.

Das Sperrelement ist ein federbelasteter Stößel, welcher von einem Elektromagneten bei dessen Aktivierung entgegen der Federbelastung bewegt wird. Der Stößel kann im deaktivierten Zustand des Sperrelements in die Drehscheibe eingreifen. Alternativ kann er im deaktivierten Zustand einen an der Drehscheibe vorstehenden Fortsatz blockieren, beispielsweise einen an der Steuerscheibe angeordneten Nocken, dessen Weg vom Stößel bei Aktivierung des Elektromagneten freigegeben wird. Die Erfindung sieht somit vor, dass das Sperrelement aktiviert werden muss, um die Blockade zu lösen. Die übrige Zeit kann es also im deaktivierten und damit energiesparenden Zustand verbleiben.

Ist das Sperrelement aktiviert, kann ein mit der Steuerscheibe verbundene Schiebeschalter der Halterung durch den Kunden von der Position "offen" auf die Position "gesperrt" verschoben werden. Dies geschieht vorzugsweise über eine Nase am Schiebeschalter, die in einer Nut bzw. Kulisse der Steuerscheibe geführt wird. Durch die Bewegung des Schiebeschalters wird die Steuerscheibe gedreht und die Nocke gleitet am Stößel vorbei.

Aufgrund der Drehbewegung der Steuerscheibe wird folgendes bewirkt: Eine Drehfeder bildet eine federbelastete Kulisse bzw. Nut für eine Nase der Drehscheibe aus. Drehfeder und Steuerscheibe befinden sich vor Beginn der Drehbewegung in einer ersten Endposition, in welcher die Steuerscheibe den Token fest hält und die Drehfeder den Bügel nicht verriegelt. Die Nut und die Nase sind kniehebelartig zueinander ausgerichtet. Dies führt zum einen dazu, dass Drehfeder und Steuerscheibe entgegengesetzt rotieren.

Eine Federbelastung der Nase in der Kulisse bzw. Nut führt dazu, dass diese Belastung am Anfang der Drehung zu überwinden ist. Sobald der Totpunkt des Kniehebels überschritten ist, unterstützt die Feder die weitere Bewegung der Steuerscheibe und der Drehfeder in die jeweilige Endposition. Damit wird sichergestellt, dass die Bewegung der Steuerscheibe und der Drehfeder auch ohne Mitwirken des Kunden nach Überschreiten des Totpunktes bis zur zweiten Endpositionen fortgeführt wird oder vor dessen Überschreiten wieder in die erste Endposition zurück geführt wird. Das versehentliche Einnehmen einer dazwischen liegenden Position kann somit verhindert werden.

In der zweiten Endposition der Drehfeder wird der Bügel mittels eines Befestigungsmechanismus verriegelt. Dies erfolgt vorzugsweise durch Schließung einer Verzahnung, so dass der Bügel nicht mehr bewegt werden kann. Das Smartphone ist dann in der Aufnahme sicher gehalten. Die verschiedenen Größen eines Smartphones erfordern, einen Winkelausgleich in der Verzahnung, vorzugsweise an der Verzahnung, die mit der Drehfeder verbunden ist. Ein solcher Winkelausgleich kann durch die Bildung einer leichten Hysterese ausgeformt werden.

Während der Bewegung der Steuerscheibe von der ersten Endposition in die zweite Endposition gibt eine weitere Nase der Steuerscheibe den vorher blockierten Token frei. Im weiteren Verlauf der Drehung gleitet die Steuerscheibe an der Kontur des Token entlang, so dass dieser entsprechend der Steigung der Kontur aus der Einschuböffnung gedrückt wird. Der Token kommt sozusagen dem Kunden entgegen und kann leicht gegriffen und entnommen werden.

Eine in der Halterung befindliche Steuerung deaktiviert den Elektromagneten, so das in dem bevorzugten Ausführungsbeispiel ein Zurückstellen des Nocken der Steuerscheibe nicht mehr möglich ist. Die Deaktivierung erfolgt entweder über einen Endschalter, der die vollendete Drehbewegung der Steuerscheibe detektiert, oder über eine Zeitschaltung, beispielsweise indem die Deaktivierung nach 3 Sekunden erfolgt. Dies hat den Vorteil, dass selbst bei nicht Erreichen der zweiten Endposition das Sperrelement wieder deaktiviert wird.

Die Entnahme des Smartphones erfolgt bevorzugt wie folgend beschrieben: Beim Einsetzen des Tokens wird eine Berechtigungsprüfung durchgeführt. Vorzugsweise wird hierfür ein am Token befestigter Transponder auf die Zuordnung zur Halterung überprüft und bei positiver Zuordnung die Steuerung aktiviert. Der Token ist somit vorzugsweise ein passiver Token, er enthält, insbesondere einen RFID-Chip. Von besonderem Vorteil ist es dabei, wenn die Abfrage des RFID-Chips durch einen Schalter ausgelöst wird, der beim Einsetzen des Tokens in die Einschuböffnung betätigt wird.

Ist die Berechtigungsprüfung negativ, bleibt die Steuerscheibe blockiert. Ist die Zuordnung des Tokens zur Halterung jedoch positiv, wird das Sperrelement aktiviert. Hierdurch lässt sich die Steuerscheibe drehen. Ein Endschalter detektiert das Einschieben des Tokens und aktiviert das Sperrelement, so dass die Steuerscheibe nun gedreht werden kann. Durch das Verstellen des Schiebeschalters von Gesperrt auf Offen wird die Steuerscheibe gedreht, so dass die Aufnahme der Drehscheibe die Einschuböffnung weiter frei gibt und der Token tiefer in die Öffnung hineingleiten kann.

Vorzugsweise wird der Token durch die Bewegung der Steuerscheibe in die Offnung eingezogen. Hierfür greift eine Nase der Steuerscheibe hinter eine Kante des Tokens. Diese Nase kann auch dazu genutzt werden, den Token in der Einschuböffnung gegen Entnahme zu sichern.

Von Vorteil ist es auch, wenn die Aufnahme der Steuerscheibe für den Token ein vollständiges Einschieben des Tokens verhindert, solange die Steuerscheibe in der zweiten Endposition positioniert ist. In dieser bevorzugten Ausführungsform kann der Token nur nach der positiven Berechtigungsprüfung tiefer in die Öffnung eingeführt werden, da nun das Sperrelement aktiviert ist und die Steuerscheibe bewegt werden kann. Hierfür gleitet eine Kante des Tokens an einer Aufnahme der Steuerscheibe entlang und dreht diese von der zweiten Endposition zurück in die erste Endposition. Die Steigung der Kante bestimmt dabei das Tempo der Drehbewegung. Durch die Drehung der Steuerscheibe wird der mit ihr verbundene Schiebeschalter in die Position offen verschoben.

Das Verstellen der Steuerscheibe in die erste Endposition bewirkt, wie oben bereits dargelegt, ein entsprechendes Verstellen der Drehfeder. Hierdurch wird die den Bügel blockierende Verzahnung gelöst, der Bügel ist entriegelt und kann ausgezogen werden. Jetzt ist es möglich, das Smartphone zu entnehmen. Das Sperrelement wird wieder deaktiviert durch Detektion der erfolgten Drehung der Steuerscheibe in die erste Endposition mittels eines Endschalters und/oder per Zeitschaltung. Hierdurch wird die Steuerscheibe blockiert, wodurch eine Entnahme des Tokens verhindert wird.

Sollte die Steuerung versagen oder der Energiespeicher der Halterung leer sein, lässt sich das Sperrelement nicht mehr aktivieren. Wenn in diesem Zustand ein Smartphone in der Aufnahme verriegelt ist, kann der Bügel nicht mehr entriegelt und somit das Smartphone nicht mehr aus der Aufnahme der Halterung entnommen werden. Für diesen Fall schlägt die Erfindung die Verwendung eines Mastertokens vor, mit dem ein Verstellen des Sperrelements ohne dessen Aktivierung erfolgen kann. Das Mastertoken weist ein Verstellelement auf, welches beweglich an dem Mastertoken gelagert ist. Es ist so ausgerichtet, dass es mit dem Sperrelement interagieren kann. Hierzu kann das Verstellelement je nach Ausführung relativ zum Mastertoken gedreht, verstellt oder verschoben werden.

Die Bewegung relativ zum Mastertoken wird genutzt, um das Sperrelement mittels des Verstellelements mechanisch in die Position zu bewegen, in der es bei Aktivierung stehen würde. In dem Ausführungsbeispiel des Sperrelements in Form des federbelasteten und durch einen Elektromagneten zu bewegenden Stößels wird dies vorzugsweise erreicht, indem das Verstellelement durch eine Drehung gegen den Stößel geführt wird und bei fortgesetzter Drehung der Stößel aus der BlockadePosition in die in die Aktiviert-Stellung gedrückt wird.

In Folge ist die Bewegung der Steuerscheibe nicht länger durch den Stößel blockiert, so dass der Schiebeschalter nun von gesperrt auf offen gestellt werden kann. Entsprechend dem oben Gesagten führt die damit einhergehende Drehung der Steuerscheibe zu einer Drehung der Drehfelder, die wiederum die Blockade des Bügels der Aufnahme entriegelt. Damit kann das Smartphone entnommen werden.

Für den Fall, dass die gespeicherte Zuordnung eines bestimmten Tokens zu einer Halterung gelöscht wurde, beispielsweise aufgrund eines Tauschs des Energiespeichers, ist es von Vorteil, wenn der Mastertoken einen Transponder aufweist, der allen Halterungen des Geschäfts zugewiesen ist.

Von Vorteil ist es auch, wenn ein Batterietausch oder ein Austausch der Steuerung bewirkt, dass der nächste eingesetzte und korrekt ausgelesene Token als berechtigter Token für diese Halterung akzeptiert wird.

## Patentansprüche

1. Verfahren zur Ver- und Entriegelung einer Aufnahme für ein mobiles Telekommunikations-Endgerät, insbesondere ein Smartphone, wobei die Aufnahme in einer Halterung angeordnet ist, wobei der Halterung ein Token zugeordnet ist, wobei der in einer Einschuböffnung der Halterung gegen Entnahme gesicherte Token freigegeben wird, wenn ein Telekommunikations-Endgerät in der Aufnahme verriegelt wird, wobei zur Entriegelung der Aufnahme der Token in die Halterung eingeführt wird, wobei eine Berechtigungsprüfung durchgeführt wird, mittels der die Zuordnung des in die Halterung eingeführten Tokens überprüft wird und wobei bei erfolgreicher Zuordnung des Tokens zur Halterung die Verriegelung entriegelt wird,
**dadurch gekennzeichnet,**
**dass** bei Verriegelung des Telekommunikations-Endgerät in der Aufnahme oder bei erfolgreicher Berechtigungsprüfung ein Signal erzeugt wird, welches an ein die Bewegung eines ersten Stellelements blockierendes Sperrelement übermittelt wird, wobei das Signal das Sperrelement aktiviert, wobei die Aktivierung des Sperrelements die Blockade der Bewegung des Stellelements zum Halten des Tokens beendet und das Sperrelement ein federbelasteter Stößel ist, welcher von einem Elektromagneten bei dessen Aktivierung entgegen der Federbelastung bewegt wird.

2. Verfahren nach Anspruch 1,
**dadurch gekennzeichnet,**
**dass** das Sperrelement deaktiviert wird, nachdem das erste Stellelement in eine bestimmte Position bewegt worden ist oder nachdem eine vorgegebene Zeit seit Freigabe der Blockade verstrichen ist.

3. Verfahren nach Anspruch 1 oder 2,
**dadurch gekennzeichnet,**
**dass** ein in die Einschuböffnung eingeführtes Mastertoken Zugriff auf das Sperrelement hat, so dass das Mastertoken, welches ein beweglich gelagertes Verstellelement aufweist, das Sperrelement ohne dessen Aktivierung von seiner Blockadeposition in die Freigabeposition bewegen kann, in dem das Verstellelement relativ zum Mastertoken gedreht, verstellt oder verschoben wird.

4. Verfahren nach einem der vorherigen Ansprüche,
**dadurch gekennzeichnet,**
**dass** bei erfolgreicher Zuordnung des Tokens zur Halterung das Token in der Halterung gegen Entnahme gesichert wird.

5. Halterung für ein mobiles Telekommunikations-Endgerät zur Durchführung eines Verfahrens nach einem der Ansprüche 1 bis 4, wobei die Halterung eine Aufnahme für das mobile Telekommunikations-Endgerät aufweist, wobei die Halterung einen Befestigungsmechanismus aufweist, mit dem das mobile Telekommunikations-Endgerät in der Aufnahme verriegelbar ist, wobei die Halterung den lösbar in einer Einschuböffnung gehaltenen Token umfasst, wobei ein Halteelement den Token in der Einschuböffnung fest hält, wenn die Aufnahme entriegelt ist und der Token vom Halteelement freigegeben ist, wenn die Aufnahme verriegelt ist,
wobei das Halteelement an dem ersten Stellelement angeordnet ist, welcher rotatorisch gelagert ist.

6. Halterung nach Anspruch 5,
**dadurch gekennzeichnet,**
**dass** eine Drehbewegung des ersten Stellelements durch das Sperrelement blockierbar ist.

7. Halterung nach Anspruch 5 oder 6,
**dadurch gekennzeichnet,**
**dass** die Halterung eine Steuerung umfasst, welche die Berechtigungsprüfung an dem Token durchführt.

8. Halterung nach einem der Ansprüche 5 bis 7,
**dadurch gekennzeichnet,**
**dass** das rotatorisch gelagerte erste Stellelement mit einem zweiten Stellelement verbunden ist, wobei das zweite Stellelement je nach Position die Verriegelung oder Entriegelung der Aufnahme bewirkt.

9. Halterung nach Anspruch 8,
**dadurch gekennzeichnet,**
**dass** das erste Stellelement und das zweite Stellelement eine kniehebelartige Verbindung aufweisen.

## Claims

1. A method for locking and unlocking a receptacle for a mobile telecommunications terminal, in particular a smartphone, wherein the receptacle is arranged in a holder, wherein a token is associated with the holder, wherein the token, which is secured in an insertion opening of the holder against removal, is released when a telecommunications terminal is locked in the receptacle, wherein the token is inserted into the holder to release the receptacle, wherein an authorisation check is executed, by means of which the association of the token inserted into the holder is checked and wherein, if the token is successfully associated with the holder, the locking device is unlocked,
**characterized in that,**
when the telecommunications terminal is locked in the receptacle or when the authorization is checked successfully, a signal is generated, which is transmitted to a locking element blocking the movement of a first actuator, wherein the signal activates the locking element, wherein the activation of the locking element terminates the blockage of the movement of the actuator for holding the token, and wherein the locking element is a spring-loaded plunger, which is moved against the spring load by an electromagnet when it is activated.

2. The method according to Claim 1,
**characterized in that**
the locking element is deactivated after the first actuator has been moved to a certain position or after a predefined time has elapsed since the release of the blockage.

3. The method according to Claim 1 or 2,
**characterized in that**
a master token inserted into the insertion opening has access to the locking element, such that the master token, which has a displaceably supported actuator, can move the locking element from its blocking position to the release position without its being activated, in which release position the actuator is rotated, adjusted or displaced relative to the master token.

4. The method according to any one of the previous claims,
**characterized in that**
the token is secured against removal from the holder if the token is successfully associated with the holder.

5. A holder for a mobile telecommunications terminal for executing a method according to any one of Claims 1 to 4, wherein the holder has a receptacle for the mobile telecommunications terminal, wherein the holder has a fastening mechanism by means of which the mobile telecommunications terminal can be locked in the receptacle, wherein the holder surrounds the token held detachably in an insertion opening, wherein a retaining element holds the token firmly in the insertion opening if the receptacle is unlocked, and the token is released from the retaining element when the receptacle is locked, wherein the retaining element is arranged on the first actuator, which is supported rotatably.

6. The holder according to Claim 5,
**characterized in that**
a rotational movement of the first actuator can be blocked by the locking element.

7. The holder according to Claim 5 or 6,
**characterized in that**
the holder comprises a controller, which performs the authorization check on the token.

8. The holder according to any one of Claims 5 to 7,
**characterized in that**
the rotatably supported first actuator is connected to a second actuator, wherein the second actuator, depending on its position, causes the locking or unlocking of the receptacle.

9. The holder according to Claim 8,
**characterized in that**
the first actuator and the second actuator have a toggle-lever-like connection.

## Revendications

1. Procédé de verrouillage et de déverrouillage d'un logement pour un terminal de télécommunication mobile, en particulier un téléphone intelligent, sachant que le logement est disposé dans un support, sachant qu'un jeton est attribué au support, sachant que le jeton protégé contre tout enlèvement dans une ouverture d'insertion du support est libéré, lorsqu'un terminal de télécommunication est verrouillé dans le logement, sachant que le jeton est inséré dans le support pour déverrouiller le logement, sachant qu'un contrôle d'autorisation est effectué au moyen duquel l'affectation du jeton inséré dans le support est contrôlée et sachant qu'en cas d'affectation réussie du jeton au support, le verrouillage est déverrouillé,
**caractérisé en ce que**
lors du verrouillage du terminal de télécommunication dans le logement ou lors du contrôle d'autorisation réussi un signal est généré, lequel est transmis à un élément de blocage bloquant le mouvement d'un premier élément de positionnement, sachant que le signal active l'élément de blocage, sachant que l'activation de l'élément de blocage met fin au blocage du mouvement de l'élément de positionnement pour maintenir le jeton et l'élément de blocage est un poussoir commandé par ressort, lequel est déplacé dans le sens opposé à l'effet du ressort par un électro-aimant lors de l'activation de celui-ci.

2. Procédé selon la revendication 1,
**caractérisé en ce que**
l'élément de blocage est désactivé après que le premier élément de positionnement ait été déplacé dans une position déterminée ou après qu'un temps prédéfini est expiré depuis la libération du blocage.

3. Procédé selon la revendication 1 ou 2,
**caractérisé en ce**
**qu'**un jeton maître inséré dans l'ouverture d'insertion a accès à l'élément de blocage de telle manière que le jeton maître, lequel comporte un élément d'ajustage logé mobile, peut déplacer l'élément de blocage sans activation de celui-ci de sa position de blocage à la position de libération, l'élément d'ajustage étant tourné, ajusté ou déplacé par rapport au jeton maître.

4. Procédé selon l'une quelconque des revendications précédentes,
**caractérisé en ce**
**qu'**en cas d'affectation réussie du jeton pour le support, le jeton dans le support est protégé contre tout enlèvement.

5. Support pour un terminal de télécommunication mobile pour exécuter un procédé selon l'une quelconque des revendications 1 à 4,sachant que le support comporte un logement pour le terminal de télécommunication mobile, sachant que le support comporte un mécanisme de fixation avec lequel le terminal de télécommunication mobile peut être verrouillé dans le logement, sachant que le support comprend le jeton maintenu mobile dans l'ouverture d'insertion, sachant qu'un élément de maintien maintient fermement le jeton dans l'ouverture d'insertion, lorsque le logement est déverrouillé et le jeton est libéré de l'élément de maintien, lorsque le logement est verrouillé, sachant que l'élément de maintien est disposé sur le premier élément de positionnement, lequel est logé de façon rotatoire.

6. Support selon la revendication 5,
**caractérisé en ce**
**qu'**un mouvement de rotation du premier élément de positionnement peut être bloqué par l'élément de blocage.

7. Support selon la revendication 5 ou 6,
**caractérisé en ce que**
le support comprend une commande, laquelle effectue le contrôle d'autorisation sur le jeton.

8. Support selon l'une quelconque des revendications 5 à 7,
**caractérisé en ce que**
le premier élément de positionnement logé de façon rotatoire est relié à un deuxième élément de positionnement, sachant que le deuxième élément de positionnement entraîne selon la position, le verrouillage ou déverrouillage du logement.

9. Support selon la revendication 8,
**caractérisé en ce que**
le premier élément de positionnement et le deuxième élément de positionnement comportent une liaison de type levier à genouillère.
